# EUROPEAN PATENT APPLICATION

(11) **EP 2 555 047 A1**
(43) Date of publication of application: **06.02.2013**
(21) Application number: 11765571.2
(22) Date of filing: 29.03.2011
(51) Int. Cl.: G02F 1/1339, G09F 9/00, G09F 9/30

(54) **LIQUID-CRYSTAL DISPLAY ELEMENT, MANUFACTURING METHOD THEREFOR, AND LIQUID-CRYSTAL DISPLAY DEVICE**

(30) Priority: 31.03.2010 JP 2010083717
(71) Applicant: Sharp Kabushiki Kaisha, Osaka-shi, Osaka 545-8522 (JP); DIC Corporation, Tokyo 174-8520 (JP)
(72) Inventor: URAYAMA, Masao, Osaka-shi, Osaka 545-8522 (JP); KAWAMURA, Joji, Osaka-shi, Osaka 545-8522 (JP)
(74) Representative: Müller - Hoffmann & Partner
(86) International application number: PCT/JP2011/057882
(87) International publication number: WO 2011/125671

(57) **Abstract**

A liquid crystal display element (10) in accordance with the present invention includes (i) a pair of substrates (1), at least one of which is a flexible substrate, (ii) a liquid crystal (3) with which a gap between the pair of substrates (1) is filled, (iii) a spacer member (4) having a height so as to sustain a thickness of the liquid crystal (3), (iv) a sealant (2) for allowing the gap to be filled with the liquid crystal (3), and (v) a barrier (5) for causing a liquid crystal filling region to be divided into (a) a first region including a display region and (b) a second region located outside the first region. The barrier (5) is attached to one substrate (1b) of the pair of the substrates (1), and is in close contact with, but not attached to, the other substrate (1a).

## Description

### Technical Field

The present invention relates to (i) a liquid crystal display element using a flexible substrate, (ii) a method for manufacturing the liquid crystal display element, and (iii) a liquid crystal display device.

### Background Art

Generally, a liquid crystal display (LCD) is constructed through (i) providing (a) a back substrate including a thin film transistor (TFT), pixel electrodes, and an alignment film and (b) a front substrate including a color filter, electrodes, and an alignment film, (ii) aligning the substrates with each other, and (iii) filling a gap between the substrates with a liquid crystal. In manufacturing an LCD, evenness and stability of a gap (cell gap) between such substrates are crucial factors in high display quality (see Patent Literature 1, for example).

In recent years, there have been attempts to use, as a substrate, a plastic film (such as a polyimide film) in stead of a conventional glass substrate, so that an LCD can be made light and/or flexible. Also, as a method for manufacturing an LCD including such a flexible substrate, roll-to-roll processing has been the focus of attention from the perspective of enhancement of efficiency in manufacturing LCDs. In roll-to-roll processing, a one-drop-fill method (ODF method) has been employed in order to take, as a continual series of steps, steps of (i) forming a seal for allowing a gap to be filled with a liquid crystal, (ii) combining, with use of the seal, a back substrate and a front substrate together, and (iii) curing the seal.

The amount of a liquid crystal to be supplied by the ODF method is required to be equal to the capacity of a liquid crystal layer to be formed. The capacity of a liquid crystal layer, however, is subject to change due to variables such as (i) that area of a liquid crystal filling region which is to be determined by a seal and (ii) the total capacity of spacer members. Therefore, it is difficult to specify an appropriate amount of a liquid crystal to supply.

In a case where the amount of a liquid crystal and the capacity of a liquid crystal layer are not consistent, an excess portion of the liquid crystal, for example, could cause the state of a cell gap to be changed so that a desired performance of an LCD might not be delivered. An LCD using a flexible substrate is particularly prone, due to the flexible substrate's lack of solidity, to a change in the state of a cell gap, which change occurs in accordance with a change in the amount of a liquid crystal supplied.

Hence, Patent Literature 2 discloses a method for manufacturing a liquid crystal display configured to reduce unevenness of the thickness of a display panel within a display region. Specifically, a sealant for causing a non-peripheral region, which is to be divided into a display region and a buffer region, is provided in a gap between a pair of substrates. A liquid crystal excessively supplied to the display region flows into the buffer region via a crack in the sealant.

### Citation List

### Patent Literatures

Patent Literature 1 Japanese Patent Application Publication, Tokukai, No. 2001-075111 A (Publication Date: March 23, 2001)
Patent Literature 2 Japanese Patent Application Publication, Tokukai, No. 2004-78142 A (Publication Date: March 11, 2004)

### Summary of Invention

### Technical Problem

In the case where, as with the technique disclosed in Patent Literature 2, an excess liquid crystal is designed to escape through a crack in a sealant, such a design can unfortunately cause the state of a cell gap to be unstable since (i) the excess liquid crystal might not adequately flow into a buffer region and (ii) the stability of the liquid crystal in a display region might not be well maintained.

The present invention has been made in view of the problem, and it is an object of the present invention to provide a liquid crystal element capable of maintaining a well-balanced distribution of a cell gap even when using a flexible substrate.

### Solution to Problem

A liquid crystal display element in accordance with the present invention includes: a pair of substrates, at least one of which is a flexible substrate; a liquid crystal sandwiched between the pair of substrates; spacer members, provided between the pair of substrates, each of which has a height so as to sustain a thickness of the liquid crystal provided between the pair of substrates; a sealant provided between the pair of substrates so as to enclose a liquid crystal filling region to be filled with the liquid crystal; and a barrier for causing the liquid crystal filling region to be divided into (i) a first region including a display region contributing to display and (ii) a second region located outside the first region, the barrier having a height, which (a) defines the gap between the pair of substrates and (b) is higher than the height of the spacer member, the barrier being attached to one of the pair of substrates and being in close contact with, but not attached to, the other.

In general, when a liquid crystal display element is filled with a liquid crystal, (i) a display region is filled with a more amount of a liquid crystal than necessary, and (ii) the liquid crystal is then sealed in by applying pressure in a direction perpendicular to surfaces of a pair of substrates.

According to the liquid crystal display element in accordance with the present invention, the barrier is, prior to filling of a gap with a liquid crystal, attached only to one of the pair of substrates. Therefore, upon filling of the gap with a liquid crystal, drawing the pair of substrates closer to each other causes an excess liquid crystal, with which the first region is filled, to flow (a) over that side of the barrier which is not attached to the substrate and then (b) into the second region. This allows the first region to retain only an amount of the liquid crystal which is suitable for forming a cell gap having a length specified by the height of the spacer members. Subsequently, when the pair of substrates are combined together so as to overlap each other, (i) the pressure generated by combining the two together causes that side of the barrier which was not attached to the substrate to be in close contact with the substrate and (ii) the sealant seals the liquid crystal in the cell gap between the pair of substrates. This allows the amount of the liquid crystal in the first region to remain stable.

Therefore, with the liquid crystal display element in accordance with the present invention, it is possible to maintain a well-balanced distribution of the cell gap in the display region.

Additionally, since the barrier of the liquid crystal display element in accordance with the present invention serves as a support member for holding the cell gap, the strength of the cell gap increases. Furthermore, although the thickness of a sealant is typically equal to that of a cell gap, the present invention configures the barrier to have a thickness greater than the thickness of the cell gap in the display region. This allows the sealant located outside the barrier to have a thickness greater than the thickness of the cell gap as well. In a case where the thickness of a sealant is greater than the thickness of a cell gap, the strength of attachment of a pair of substrates typically increases. This makes it possible to (i) increase the sturdiness of the cell gap and therefore (ii) provide a liquid crystal display element having an excellent mechanical characteristic.

A liquid crystal display device in accordance with the present invention includes the liquid crystal display element.

With the configuration, it is possible to provide a liquid crystal display device which excels in display quality.

In order to solve the foregoing problem, a method in accordance with the present invention is for manufacturing a liquid crystal display element, said liquid crystal display element, including: a pair of substrates, at least one of which is a flexible substrate; a liquid crystal with which a gap between the pair of substrates is filled; spacer members, provided between the pair of substrates, each of which has a height so as to sustain a thickness of the liquid crystal provided between the pair of substrates; and a sealant provided between the pair of substrates so as to enclose a liquid crystal filling region to be filled with the liquid crystal, said method, including the steps of: (i) putting a barrier on a boundary, of one of the pair of substrates, between (a) a first region including a display region contributing to display and (b) a second region located outside the first region, which barrier is greater in height than the spacer member and is in a molten state, and then causing curing of the barrier to be initiated; and (ii) after the step (i), stacking together the pair of substrates, while the display region is filled with the liquid crystal, so that part of the barrier, which part corresponds to part located higher than the spacer member, is collapsed.

In the step (i), the barrier is attached to one of the pair of substrates.

The step (ii) is carried out after curing of the barrier is at least initiated. First, while (a) the barrier is in such a state and (b) the pair of substrates are made close to each other, pressure is applied to the pair of substrates. This causes an excess liquid crystal, with which the first region is filled, to flow (A) over that side of the barrier which is not attached to the substrate and then (B) into the second region. This allows the first region to retain only an amount of a liquid crystal which is suitable for forming a cell gap having a length specified by the height of the spacer member. That is, the second region, which is separated from the other region by the barrier greater in height than the spacer member, functions as a buffer that stores the excess liquid crystal. This allows the cell gap to be less affected by the amount of a liquid crystal with which to fill the first region.

Next, the barrier, which has started to become cured, (i) is collapsed and deformed by the pressure applied to the pair of substrates and (ii) becomes in close contact with the other substrate to which the barrier was not attached. This allows the amount of a liquid crystal in the first region to remain stable. Note that (a) the barrier, which has started to become cured, does not become attached to, but in close contact with, the other substrate and (b) the pressure applied to the pair of substrates causes the sealant to seal the liquid crystal with the cell gap between the pair of substrates is filled.

As has been made clear, with the method in accordance with the present invention, it is possible to manufacture a liquid crystal display element with a cell gap whose balanced distribution is well maintained.

Furthermore, in order to solve the foregoing problem, a method in accordance with the present invention is for manufacturing a liquid crystal display element, said liquid crystal display element, including: a pair of substrates, at least one of which is a flexible substrate; a liquid crystal with which a gap between the pair of substrates is filled; spacer members, provided between the pair of substrates, each of which has a height so as to sustain a thickness of the liquid crystal provided between the pair of substrates; and a sealant provided between the pair of substrates so as to enclose a liquid crystal filling region to be filled with the liquid crystal, said method, including the steps of: (i) putting a barrier on a boundary, of one of the pair of substrates, between (a) a first region including a display region contributing to display and (b) a second region located outside the first region, which barrier is greater in height than the spacer member and is in a molten state, and then curing the barrier; (ii) after the step (i), stacking together the pair of substrates while the display region is filled with the liquid crystal; and (iii) after the step (ii), causing the barrier to be subjected to a plastic deformation so that part of the barrier, which part corresponds to part located higher than the spacer member, is collapsed by heating the barrier.

With this method also, it is possible to manufacture a liquid crystal display with a cell gap whose balanced distribution is well maintained.

Additional objects, features, and strengths of the present invention will be made clear by the description below. Furthermore, the advantages of the present invention will be evident from the following explanation with reference to the drawings.

### Advantageous Effects of Invention

The present invention includes: a pair of substrates, at least one of which is a flexible substrate; a liquid crystal with which a gap between the pair of substrates is filled; spacer members, provided between the pair of substrates, each of which has a height so as to sustain a thickness of the liquid crystal provided between the pair of substrates; a sealant provided between the pair of substrates so as to enclose a liquid crystal filling region to be filled with the liquid crystal; and a barrier for causing the liquid crystal filling region to be divided into (i) a first region including a display region contributing to display and (ii) a second region located outside the first region, the barrier having a height, which (a) defines the gap between the pair of substrates and (b) is higher than the height of the spacer member, the barrier being attached to one of the pair of substrates and being in close contact with, but not attached to, the other. This makes it possible to provide a liquid crystal display element with a cell gap whose balanced distribution is well maintained.

### Brief Description of Drawings

Fig. 1

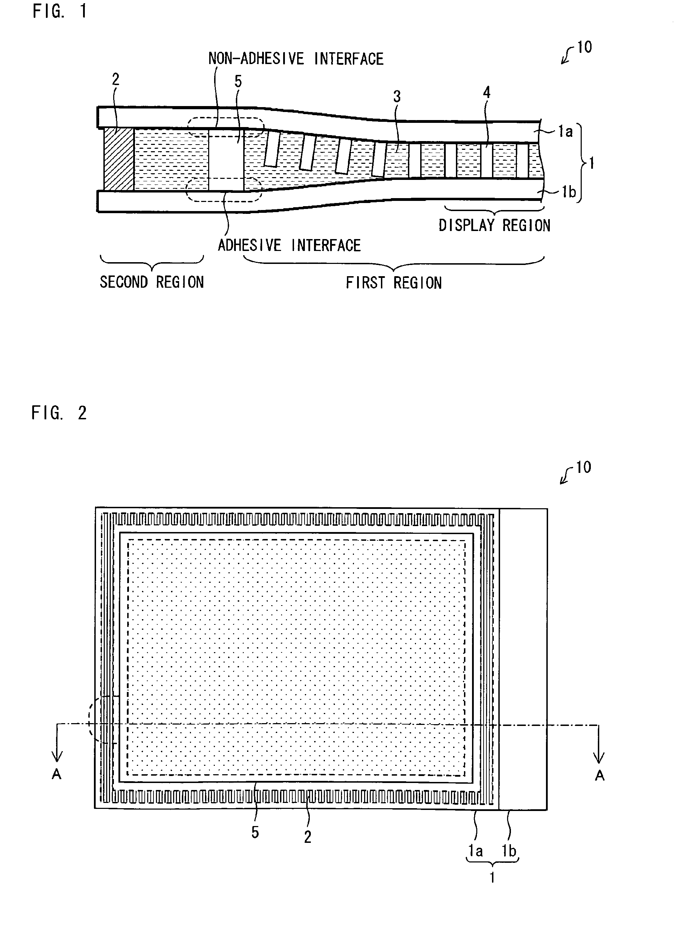

   Fig. 1 is a cross-sectional view schematically illustrating a liquid crystal display element in accordance with an embodiment of the present invention.
Fig. 2
   Fig. 2 is a top view schematically illustrating the liquid crystal display element in accordance with the embodiment of the present invention.
Fig. 3

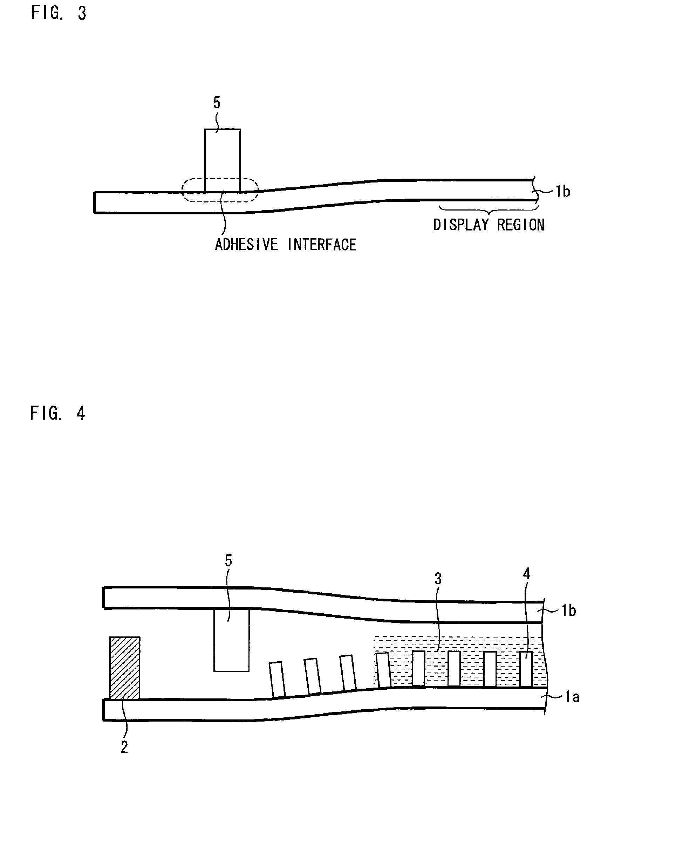

   Fig. 3 is a cross-sectional view for illustrating a barrier-putting step in a method for manufacturing the liquid crystal display element in accordance with the present invention.
Fig. 4
   Fig. 4 is a cross-sectional view for illustrating a liquid-crystal-filling step in the method for manufacturing the liquid crystal display element in accordance with the present invention.

### Description of Embodiments

The following description will discuss, with reference to the drawings, an embodiment of a liquid crystal display element in accordance with the present invention.

### (Configuration of Liquid Crystal Display Element 10)

A configuration of a liquid crystal display element 10 will be schematically described below with reference to Fig. 1 and Fig. 2. Fig. 1 is a cross-sectional view illustrating the liquid crystal display element 10 of the present embodiment, and Fig. 2 is a top view of Fig. 1. Fig. 1 is a cross-sectional view taken along the line A-A' of the liquid crystal display element illustrated in Fig. 2.

Note that Fig. 1 and Fig. 2 illustrate only main components of the liquid crystal display element 10. Also note that Fig. 1 illustrates, in an exaggerating manner for convenience, (i) a space (cell gap) between a pair of substrates 1 and (ii) members in the space.

As illustrated in Fig. 1 and Fig. 2, the liquid crystal display element 10 includes (i) a front substrate 1a and a back substrate 1b which are the pair of substrates 1, (ii) a liquid crystal 3 with which the cell gap between the pair of substrates 1 is filled, (iii) a sealant 2 with which the liquid crystal 3 is sealed, (iv) spacer members 4 by which the thickness of the liquid crystal 3 is maintained, and (v) a barrier 5 by which a region (liquid crystal filling region) to be filled with the liquid crystal 3 is divided.

At least one of the front substrate 1a and the back substrate 1b is a flexible substrate. A material for the front substrate 1a and the back substrate 1b each is not limited to a particular one, provided that the material is substantially transparent. Examples of such a material encompass glass, ceramic, and plastic. Examples of plastic encompass: cellulose derivative such as cellulose, triacetylcellulose, diacetyl cellulose; polycycloolefin derivative; polyester such as polyethylene-telephthalate and polyethylenenaphthalate; polyolefin such as polypropylene and polyethylene; polycarbonate; polyvinyl alcohol; polyvinyl chloride; polyvinylidene chloride; polyamide; polyimide; polyimide-amide; polystyrene; polyacrylate; polymethyl methacrylate; polyether sulfone; polyarylate; and inorganic-organic composite materials such as glass fiber-epoxy resin and glass fiber-acrylic resin.

Note that transparent electrodes (ITO film, not illustrated) are provided on surfaces (hereinafter, referred to as inner surfaces) of the front substrate 1a and the back substrate 1b, which inner surfaces face each other. Pixels (pixel: a minimum unit of image display) are formed in regions partitioned by the respective transparent electrodes.

Depending on a method for driving the liquid crystal display element 10, it is possible to provide, in the inner surfaces of the pair of substrates 1, members such as electrically conductive wiring, switching elements, and insulating films. Note that the present embodiment is not limited to a specific method for driving the liquid crystal display element 10. For example, it is feasible to employ a passive matrix method or an active matrix method. Also note that, as appropriate, it is possible to further provide, on an interface between the respective inner surfaces and the liquid crystal 3 in the pair of substrates 1, alignment films each of which has been subjected to an alignment treatment.

The liquid crystal 3 is provided in the cell gap between the pair of substrates 1, and is sealed with the sealant 2 so that nothing will intrude into the gap. Note that a well known liquid crystal layer can be employed as the liquid crystal 3. As such, the present embodiment is not limited to any particular one.

The sealant 2 is provided so as to enclose the liquid crystal filling region to be filled with the liquid crystal 3. The sealant 2 has functions to (i) combine the pair of substrates 1 together and (ii) allow the cell gap to be filled with the liquid crystal 3.

The spacer members 4 are provided in the cell gap between the pair of substrates 1. The spacer members 4 each have a height so as to maintain the thickness of the liquid crystal 3 in the cell gap between the pair of substrates 1. The form of the spacer member 4 is not particularly limited, and can therefore be, with resin etc. as a material, columnar or spherical, for example.

The barrier 5 is provided in the cell gap between the pair of substrates 1 so as to cause the liquid crystal filling region, which is to be filled with the liquid crystal 3, to be divided into (i) a first region including a display region contributing to display and (ii) a second region located outside the first region. The barrier 5 is attached to one (the back substrate 1b in the present case) of the pair of substrates 1, and is in close contact with, but not attached to, the other (the front substrate 1a in the present case). It follows that (i) an adhesive interface is formed between the barrier 5 and the back substrate 1b and (ii) a non-adhesive interface is formed between the barrier 5 and the front substrate 1a.

By, for example, disassembling the liquid crystal display element 10, it is possible to assess whether the barrier 5 is attached to or non-adhesively in close contact with each of the pair of substrates 1.

The barrier 5 is preferably configured to cause a liquid crystal filling region to be divided such that a first region and a second region each remain airtight. According to the present embodiment, (i) the first region remains airtight by being enclosed with the barrier 5 and (ii) the second region remains airtight by being enclosed with the barrier 5 and with the sealant 2.

The height of the barrier 5 is greater than that of the spacer member 4. Specifically, the barrier 5 preferably functions, along with the sealant 2, to set the thickness of the cell gap within the second region to be greater than the height of the spacer member 4.

Note that the word "height" in the present embodiment means a length in a direction in which the thickness of the cell gap between the pair of substrates 1 is measured. Also note that part of the first region, which part serves as the display region, meets the following criteria: (i) the part is not affected by the height of the barrier 5 and (ii) the part has the cell gap specified by the heights of the spacer members 4.

The barrier 5 and the sealant 2 each can be made from a sealing material. In order to form the barrier 5 and the sealant 2 each in a preferred height, the following method, for example, can be employed: (i) a first method in which an additive, which has a height greater than that of the spacer member 4, is selected as an additive to be combined with the sealing material or (ii) a second method in which the degree to which the sealing material can be collapsed is adjusted by increasing the viscosity and/or elasticity of a sealing material.

In the first method, examples of the sealing material include, but not limited to, a hardening resin composition prepared by adding a polymerization initiator to an epoxy resin or acrylic resin having photocurable, thermosetting, or photothermal-curable property. For example, a type of filler made of an inorganic material or an organic material can be employed as the additive in order to adjust physical properties such as moisture permeability, elastic modulus, and viscosity. Examples of the form of such a filler include, but not limited to, (a) a spherical form having a diameter greater than the height of the spacer member 4, (b) a fibrous form having a height greater than the height of the spacer member 4, and (c) an amorphous form having a size greater than the height of the spacer member 4. Alternatively, in order to properly control the length of the cell gap, it is possible to use gap sustainers having spherical or fibrous forms having monodisperse diameters which are greater than the heights of the spacer members 4 or lengths, respectively.

On the other hand, in the second method, in a case where an application of a sealing material by use of a dispenser or a screen printing method, it is preferable to employ a method in which the viscosity and/or elasticity of the sealing material are/is increased after the application of the sealing material. This is because an excessive increase in viscosity and/or elasticity of the sealing material is not preferred during the application of the sealing material. Examples of such a method include a method in which a sealing material having an optical-delay curing characteristic is used to adjust an amount of photoirradiation energy so that the viscosity and/or elasticity of the sealing material can be maintained within a desired range.

Examples of the sealing material having an optical-delay curing characteristic include a composite containing the following photo cation polymerizable compound. The photo cation polymerizable compound need only have, in each molecule, at least one photo cation polymerizable functional group. Examples of the photo cation polymerizable functional group encompass an epoxy group, an oxetane group, a hydroxyl group, a vinyl ether group, an episulphide group, and an ethyleneimine group.

Examples of a compound including an epoxy group encompass (i) bisphenol epoxy resin such as bisphenol-A epoxy resin and bisphenol-F epoxy resin and (ii) epoxy resin having two functions or more, such as phenol novolac epoxy resin, cresol novolac epoxy resin, glycidyl ether epoxy resin, and glycidylamine epoxy resin. Examples of a commercial product of such include Epicoat 828, Epicote 1001, and Epicoat 1002 (all manufactured by Japan Epoxy Resins Co., Ltd.).

A photo cation polymerization initiator for the sealing material can be of an ionic photoacid generating type, or of a non-ionic photoacid generating type. Examples of a photo cation polymerization initiator of the ionic photoacid generating type include (i) onium salt such as aromatic diazonium salt, aromatic halonium salt, and aromatic sulfonium salt, and (ii) organometallic complex such as iron-allene complex, titanocene complex, arylsilanol-aluminum complex. Such photo cation polymerization initiators can be used alone or in combination. On the other hand, examples of a photo cation polymerization initiator of the non-ionic photoacid generating type include nitrobenzyl ester, sulfonic acid derivative, phosphoric acid ester, phenolsulfonic acid ester, diazonaphtoquinone, and N-hydroxyimide sphonate .

The ratio of the amount of the photo cation polymerization initiator to that of photo cation polymerization compound is 0.1-30 PBW : 100 PBW, and is preferably 0.3-10 PBW : 100 PBW.

It is preferable to add a curing control agent to the sealing material having an optical-delay curing characteristic so as to make it easy to control the viscosity and/or elasticity of the sealing material. In general, curing control agents are compounds each having ether linkage. The ratio of the amount of the curing control agent to that of the cation polymerization compound is 0.1-30 PBW : 100 PBW, and is preferably 0.5-20 PBW : 100 PBW. A material for the curing control agent is not limited to any particular one, provided that the material is a compound having ether linkage. Examples of the compound include (i) polyalkylene oxide such as polyethylene glycol, polypropylene glycol, and polyoxy tetramethylene glycol, (ii) crown ether, and (iii) the like. It is possible to use one of such curing control agents by itself, or more than one of such simultaneously.

Examples of a light source for causing energy to be irradiated to control the viscosity and/or elasticity of the sealing material encompass microwaves, infrared rays, visible light, ultraviolet rays, X rays, and gamma rays. Among them, ultraviolet rays, whose suitable wavelengths are in the range of 200 nm to 500 nm, are suitably used. Examples of a light source to emit ultraviolet rays include a high-pressure mercury lamp, an ultrahigh-pressure mercury lamp, a chemical lamp, and a Xenon arc lamp. The strength of light irradiation energy is to be determined by how thick the sealing material is intended to be.

Because of such a configuration, the liquid crystal display element 10 in accordance with the present embodiment is manufactured such that the first region has only the liquid crystal 3 which has an amount necessary to specify the display region in the first region. This allows a stable distribution of the liquid crystal 3 to be maintained in the display region.

Furthermore, by using the liquid crystal display element 10 in accordance with the present embodiment, it is possible to provide a liquid crystal display device which excels in display quality. In a case where the liquid crystal display element 10 is for use in a liquid crystal display device, the following configuration is further provided to the liquid crystal display element 10: (i) a color filter is provided on the inner surface of the front substrate 1a, (ii) an optical member such as a polarizing filter is attached to at least one of outer surfaces (surfaces opposite the inner surfaces) of the front substrate 1a and the back substrate 1b, and (iii) members are provided such as a light reflector and an illumination device for illuminating the liquid crystal display element 10. Such a configuration is similar to a configuration of a conventional liquid crystal display device, and is therefore not illustrated.

### (Method for Manufacturing Liquid Crystal Display Element 10)

A method for manufacturing the liquid crystal display element 10 in accordance with the embodiment will be described below with reference to Fig. 3 and Fig. 4. Fig. 3 and Fig. 4 are cross-sectional views illustrating the method for manufacturing the liquid crystal display element 10.

The method for manufacturing the liquid crystal display element 10 in accordance with the embodiment includes the steps of, for example, (i) forming spacer members 4 on at least one of a pair of substrates 1, (ii) forming the sealant 2 on at least one of the pair of substrates 1, (iii) putting a barrier on a boundary, of one of the pair of substrates 1, between (a) the first region including the display region contributing to display and (b) the second region located outside the first region, which barrier is greater in height than the spacer member 4 and is in a molten state, and then causing curing of the barrier 5 to be initiated so that the barrier 5 is attached to one of the pair of substrates 1, and (iv) stacking together the pair of substrates 1 so that (A) part of the barrier 5, which part corresponds to part located higher than the spacer member 4, is collapsed and then (B) a gap between the pair of substrates 1 is filled with the liquid crystal.

Examples of a method for filling the liquid crystal filling region with the liquid crystal include the ODF method and the vacuum injection method. While the vacuum injection method is not suitable, in terms of handling, for a flexible substrate having a low self-standing quality, the ODF method is compatible with roll-to-roll processing which is suitable for a flexible substrate. In view of the circumstances, the following description will discuss a case where the ODF method is employed to carry out the step (iv) (refer to [0054] in the PCT International Publication). Note, however, that the present embodiment is not limited to such.

Each of the steps included in the method for manufacturing the liquid crystal display element 10 will be described below.

First, in the step (i) (refer to [0054] in the PCT International Publication), the plurality of spacer members 4 are formed on at least one (the front substrate 1a in the present case) of the pair of substrates 1. It is desirable that the spacer members 4 are formed with the use of a method in which arrangement and density of the spacer members 4 can be controlled. For example, it is possible to prepare the spacer members 4 in columnar forms by photolithography, or to prepare the spacer members 4 in spherical forms by ink jet.

In the step (ii) (refer to [0054] in the PCT International Publication), the sealant 2 is formed on at least one (the front substrate 1a in the present case) of the pair of substrates 1. The formation of the sealant 2 is secured for the liquid crystal filling region. In the present case, the sealant 2 is formed by use of a method such as (a) lithography using a dispenser or (b) screen printing, while employing a photo-curing resin as the sealant 2.

In the step (iii) (refer to [0054] in the PCT International Publication), the barrier 5, which is greater in height than the spacer member 4 and is in a molten state, is placed on a boundary of one (the back substrate 1b in the present case) of the pair of substrates 1, which causes the liquid crystal filling region to be divided into the first region and the second region (see Fig. 3).

In a case where, for example, a sealing material having an optical-delay curing characteristic is used as the barrier 5, (a) the sealing material, which has not been subjected to light, is placed on the back substrate 1b, (b) the sealing material is irradiated with light whose irradiant amount has been adjusted, (c) the sealing material becomes half-cured, and (d) the step (iv) (refer to [0054] in the PCT International Publication) is then carried out.

Alternatively, in a case where a thermosetting sealing material is used as the barrier 5, (a) the thermosetting sealing material, which has not been subjected to thermal treatment, is placed on the back substrate 1b, (b) the sealing material is made partially cured by being heated, and (c) the step (iv) (refer to [0054] in the PCT International Publication) is then carried out. In such a case, curing of the barrier 5 can be completed by isotropic heating for the liquid crystal 3 which isotropic heating is to be carried out prior to filling of the liquid crystal filling region with a liquid crystal.

In a case, as another alternative, where a thermoplastic sealing material is used as the barrier 5, a molten thermoplastic sealing material can be placed and cured on the back substrate 1b.

In the step (iii) (refer to [0054] in the PCT International Publication), the barrier 5 is attached only to the back substrate 1b on which the barrier 5 is placed while being in a molten state.

Additionally, in the step (iii), the height of the barrier 5 is set so as to, in the step (iv) (refer to [0054] in the PCT International Publication) to follow, reach a height falling within a proper range (a range higher than the space member 4) when the barrier 5 is collapsed.

In the step (iii), the pair of substrates 1 are combined, from inside, so as to overlap each other while the display region is being filled with the liquid crystal 3 (see Fig. 4).

Note here that the display region is filled with the liquid crystal 3 by use of the ODF method. The amount of the liquid crystal with which the display region is filled is determined in accordance with a cell capacity. The cell capacity is the product of (i) an area of the liquid crystal filling region of the front substrate 1a and (ii) a height of the spacer member 4 formed on the front substrate 1a. It is preferable that the amount of the liquid crystal to be thus determined is greater than the cell capacity which is the product of (a) an area of the first region of the front substrate 1a and (b) the height of the spacer member 4.

After the display region is filled with the liquid crystal 3, the substrates 1a and 1b are combined and overlap each other so that part of the barrier 5, which part is higher than the spacer member 4, is collapsed. The detail will be described below.

First, a platform having a mechanism, such as an electrostatic chuck, for causing the platform to absorb a substrate is prepared. The platform is caused to absorb the front substrate 1a and the back substrate 1b, and the pair of substrates 1 are caused to be arranged such that (i) an alignment film of the front substrate 1a and an alignment film of the back substrate 1b face each other and (ii) the sealant 2 and the back substrate 1b are not in contact with each other. The space between the pair of substrates 1 are depressurized while the pair of substrates 1 is in such a state. Upon completion of depressurization, how the pair of substrates 1 is combined is adjusted (alignment correction) while how the front substrate 1a and the back substrate 1b are combined and overlap each other is being confirmed. Upon completion of the alignment correction, the pair of substrates 1 is drawn closer to each other to such an extent that the front substrate 1a and the back substrate 1b are in contact with each other. While the pair of substrates 1 is in such a state, the space between the pair of substrates 1 is filled with inert gas such that normal air pressure is gradually recovered. Throughout this process, an excess liquid crystal 3, with which the first region on the front substrate 1a is filled, flows into the second region via a gap between the barrier 5 and the front substrate 1a. This allows the first region to retain only an amount of liquid crystal which is necessary for proper formation of the cell gap in the display region.

Subsequently, due to pressure that the front substrate 1a and the back substrate 1b receive from the atmospheric pressure, part of the barrier 5, which part is higher than the spacer member 4, is collapsed. In the case where, during this process, a material for the barrier 5 is a sealing material having an optical-delay curing characteristic or a thermosetting sealing material, the curing of the barrier 5 has already been initiated (the barrier 5 has already been partially cured). As such, the barrier 5 is subjected to a plastic deformation, so as to become in close contact with, but not to become attached to, the front substrate 1a.

Next, due to the pressure that the front substrate 1a and the back substrate 1b receive from the atmospheric pressure, the sealant 2 causes the pair of substrates 1 to be combined, so that the liquid crystal 3 is sealed between the pair of the substrates 1. This forms a liquid crystal layer. In so doing, the sealant 2 is irradiated with ultraviolet rays so as to be cured. This allows the sealant 2 and the barrier 5 each to become elastic body so that the first region and the second region each remain airtight. This allows the amount of the liquid crystal 3 to be stabilized in the first region.

In a case where the barrier 5 is made of a thermoplastic sealing material, (a) the barrier 5 is cured during the step (iv) (refer to [0054] in the PCT International Publication) so as not to be attached to the front substrate 1a, (b) the barrier 5 is subjected to a plastic deformation during a heating process such as isotropic heating of the liquid crystal 3, which heating process is carried out subsequent to the step (iv), and therefore (c) the proper part of the barrier 5 is collapsed. This causes the barrier 5 to be in close contact with the front substrate 1a.

With the process, the thickness of the cell gap is not much affected by the amount of a liquid crystal to fill the space. This allows the distribution of the liquid crystal in the cell gap to have a small standard deviation. It is therefore possible to manufacture a liquid crystal display element 10 with high display quality.

Note that, although members such as active-matrix element arrays, color filters, transparent electrodes, and alignment films are provided on the front substrate 1a and on the back substrate 1b, a method for forming such is similar to a method employed in a process of manufacturing a conventional liquid crystal element, and is therefore not illustrated.

### [Summary of Embodiment]

As described above, the liquid crystal display element in accordance with the present invention is preferably configured such that the barrier causes the liquid crystal filling region to be divided so as to keep the first region and the second region each airtight.

With the configuration, it is possible to (i) stabilize the amount of a liquid crystal in the first region and (ii) maintain a well-balanced distribution of a cell gap.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

The present invention can be used, as a liquid crystal display element using a flexible substrate, for a wide variety of equipment.

### Reference Signs List

- 1: Pair of substrates 1
- 1a: Front substrate
- 1b: Back substrate
- 2: Sealant
- 3: Liquid crystal
- 4: Spacer member
- 5: Barrier
- 10: Liquid crystal display element

## Claims

1. A liquid crystal display element comprising:
a pair of substrates, at least one of which is a flexible substrate;
a liquid crystal with which a gap between the pair of substrates is filled;
spacer members, provided between the pair of substrates, each of which has a height so as to sustain a thickness of the liquid crystal provided between the pair of substrates;
a sealant provided between the pair of substrates so as to enclose a liquid crystal filling region to be filled with the liquid crystal; and
a barrier for causing the liquid crystal filling region to be divided into (i) a first region including a display region contributing to display and (ii) a second region located outside the first region, the barrier having a height, which (a) defines the gap between the pair of substrates and (b) is higher than the height of the spacer member,
the barrier being attached to one of the pair of substrates and being in close contact with, but not attached to, the other.

2. The liquid crystal display element as set forth in claim 1, wherein the barrier causes the liquid crystal filling region to be divided so as to keep the first region and the second region each airtight.

3. A liquid crystal display device comprising a liquid crystal display element as set forth in claim 1 or 2.

4. A method for manufacturing a liquid crystal display element,
said liquid crystal display element, comprising:
a pair of substrates, at least one of which is a flexible substrate;
a liquid crystal with which a gap between the pair of substrates is filled;
spacer members, provided between the pair of substrates, each of which has a height so as to sustain a thickness of the liquid crystal provided between the pair of substrates; and
a sealant provided between the pair of substrates so as to enclose a liquid crystal filling region to be filled with the liquid crystal,
said method, comprising the steps of:
(i) putting a barrier on a boundary, of one of the pair of substrates, between (a) a first region including a display region contributing to display and (b) a second region located outside the first region, which barrier is greater in height than the spacer member and is in a molten state, and then causing curing of the barrier to be initiated; and
(ii) after the step (i), stacking together the pair of substrates, while the display region is filled with the liquid crystal, so that part of the barrier, which part corresponds to part located higher than the spacer member, is collapsed.

5. A method for manufacturing a liquid crystal display element,
said liquid crystal display element, comprising: a pair of substrates, at least one of which is a flexible substrate;
a liquid crystal with which a gap between the pair of substrates is filled;
spacer members, provided between the pair of substrates, each of which has a height so as to sustain a thickness of the liquid crystal provided between the pair of substrates; and
a sealant provided between the pair of substrates so as to enclose a liquid crystal filling region to be filled with the liquid crystal,
said method, comprising the steps of:
(i) putting a barrier on a boundary, of one of the pair of substrates, between (a) a first region including a display region contributing to display and (b) a second region located outside the first region, which barrier is greater in height than the spacer member and is in a molten state, and then curing the barrier;
(ii) after the step (i), stacking together the pair of substrates while the display region is filled with the liquid crystal; and
(iii) after the step (ii), causing the barrier to be subjected to a plastic deformation so that part of the barrier, which part corresponds to part located higher than the spacer member, is collapsed by heating the barrier.
